# EUROPÄISCHE PATENTSCHRIFT

(11) **EP 1 044 860 B1**
(45) Veröffentlichungstag und Bekanntmachung des Hinweises auf die Patenterteilung: **05.03.2003**
(21) Anmeldenummer: 00107214.9
(22) Anmeldetag: 01.04.2000
(51) Int. Cl.: B61D 17/08, B61D 17/04, B62D 31/02, E06B 3/96

(54) **Einrichtung zur Verstärkung der Ecken in Ausschnitten von orthogonal versteiften Wand-/Deckenbereichen von Fahrzeugen**
Reinforcing structure for corners of openings in orthogonally stiffened walls or roofs for vehicles
Structure de renforcement pour coins d'ouvertures dans des parois ou plafonds rigidifiés orthogonalement pour véhicules

(30) Priorität: 12.04.1999 DE 19916286
(43) Veröffentlichungstag der Anmeldung: 18.10.2000
(73) Patentinhaber: ALSTOM LHB GmbH, 38239 Salzgitter (DE)
(72) Erfinder: Grüning, Hans, 38259 Salzgitter (DE); Hohenstein, Michael, 38226 Salzgitter (DE); Winkler, Joachim, Dipl.-Ing., 38231 Gross Denkte (DE)

(56) Entgegenhaltungen:
- WO-A-99/62752
- DE-A- 2 050 575
- DE-A- 19 757 203
- DE-C- 19 757 204
- GB-A- 885 279

## Beschreibung

Die Erfindung betrifft eine Einrichtung zur Verstärkung der Ecken in Ausschnitten von orthogonal versteiften Wand-/Deckenbereichen von Fahrzeugen.

Es ist bekannt, die Seitenwand aus den Profilsteifen der Voute, Fensterstiele, Brüstung und Türportale zu verschweißen, wobei die Seitenwand im Bereich der Ausschnitte rechtwinklige Ecken mit einer Schweißnaht bildet. Da bei dieser Bauart auftretende Stoßkräfte in die starr miteinander verbundenen Profile übertragen werden, treten im Bereich der Fensterecken starke Spannungskonzentrationen auf, die zu Rissen der Fenstergurte im Radius der Fensterecken führen können. Es sind daher verschiedene Maßnahmen vorgeschlagen worden, die Fensterecken verstärkt auszuführen.

Durch die DE 20 50 575 C3 ist eine Lösung bekannt, bei der bei einem aus einem einzigen Strangpreßprofil bestehenden Fenstersteg der Kraftfluß der hohen Spannungen in breiter Bandführung ungebrochen über die Fensterecken geführt und außerhalb der Spannungskonzentration in die benachbarten Profile eingeleitet wird, ohne hierbei die Fensterecken zu verstärken oder diese mit störenden Verstärkungsteilen zu versehen. Nach der genannten Patentschrift wird dies dadurch erreicht, daß das auf eine größere Länge als die Höhe des Fensterausschnittes zugeschnittene Strangpreßprofil an den Enden beidseitig parallel zu den Längskanten an der Innenseite der Randprofile bis zum vorgesehenen Radiusbeginn der Fensterecken angeschnitten wird, wobei die dabei entstandenen Seitengurte horizontal nach außen mit einem Radius der Außenkante, welcher der Abrundung der Fensterecke entspricht, in den Ober- und Untergurt einlaufend abgebogen und mit diesem verschweißt werden und die auf die Höhe des Fensterausschnittes zugeschnittenen Mittelstreifen auf Stoß mit den die Dachvoute und die Seitenwand bildenden Strangpreßprofilen verschweißt werden.

Aus der GB 885 279 A ist eine Konstruktion für eine Wagenkastenrahmenstruktur bekannt, die aus horizontalen und vertikalen bzw. im Kreuzungspunkt um 90° gegeneinander gedreht angeordneten Tragprofilen gebildet ist. Im Kreuzungspunkt sind jeweils kreuzförmige Klammerstücke von gleichartiger oder ähnlicher Werkstoffstruktur und Fertigungsart angeordnet, über welche die Tragprofile verbunden sind. Die Klammerstücke weisen um 90° zueinander gedreht angeordnete u-förmige Führungsausnehmungen auf, in denen die u-förmigen Tragprofile formschlüssig gehalten und mit dem Klammerstück verschweißt sind. Die durch die Skelettstruktur gebildeten Ausschnitte weisen aufgrund der geometrischen Ausbildung der Klammerstücke, die wiederum durch das Fertigungsverfahren zu seiner Herstellung geprägt ist, auf der dem Ausschnitt zugewandten Randfläche Eckbereiche mit größeren Radien auf. Scharfkantige bzw. nahezu rechtwinklige Eckbereiche von Ausschnitten sind mit den offenbarten Klammerstücken nicht herstellbar.

Nun ist es oft erforderlich oder erwünscht, Fenster- und Türecken nahezu rechtwinklig ohne größere Radien auszuführen, wofür bisher nur die schon eingangs erwähnten massiven Verstärkungen der Ecken von Ausschnitten bekannt sind.

Der Erfindung liegt daher die Aufgabe zugrunde, für im wesentlichen rechtwinklige Ausschnitte, insbesondere für Fenster- und Türecken, eine Lösung vorzuschlagen, die die Eckschweißnaht vermeidet, auf störende zusätzliche Verstärkungen verzichtet und den Beanspruchungen in diesem Bereich gerecht wird.

Erfindungsgemäß wird dies durch die Merkmale des Hauptanspruches erreicht. Vorteilhafte Ausgestaltungen ergeben sich aus den Unteransprüchen.

Mit dem erfindungsgemäßen Guß-Formstück, das über die Versteifungsprofilteile und das Außenblech in den Festigkeitsverband eingebunden ist, wurde lokal eine hohe Steifigkeit erreicht, so daß eine geringe Verformung und somit Beanspruchung einer rechtwinkligen Ecke ermöglicht wird. Durch weiche Übergänge zum Gerippe und die erhabene tropfenförmige Ausbildung zum Außenblech wurden Steifigkeitssprünge vermieden.

Im folgenden soll die Erfindung anhand eines Ausführungsbeispieles näher erläutert werden. In der zugehörigen Zeichnung zeigen:
- Fig. 1: die erfindungsgemäßen Guß-Formstücke in den Ecken zweier benachbarter Fensterausschnitte in der Seitenwand eines Eisenbahn-Personenwagens,
- Fig. 2: eine zum Außenblech gerichtete Seitenansicht eines Guß-Formstückes in der unteren linken Ecke eines Fensterausschnittes nach Fig. 1,
- Fig. 3: eine Ansicht auf eine Stirnseite des Guß-Formstückes in Z-Richtung,
- Fig. 4: einen Schnitt nach der Linie A-A in Fig. 3.

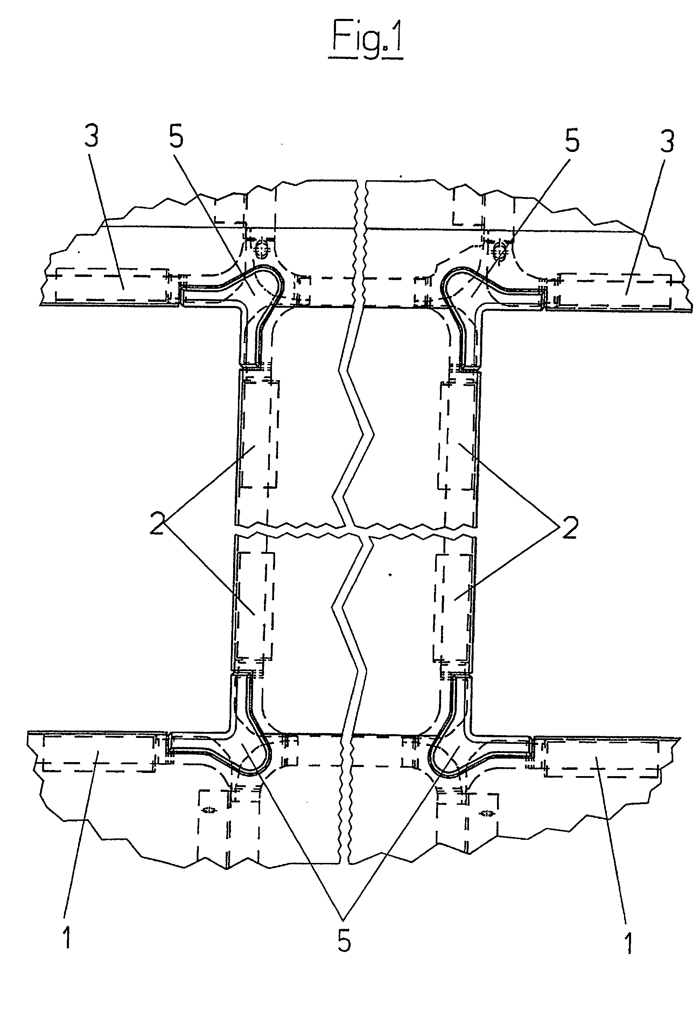

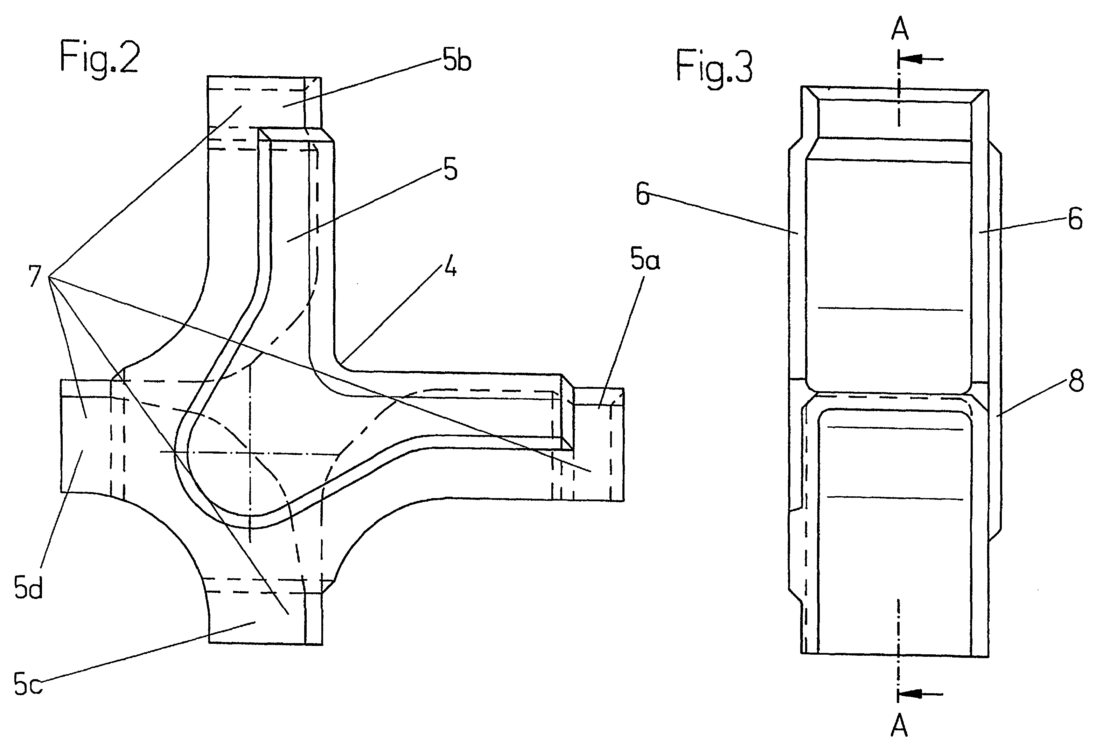

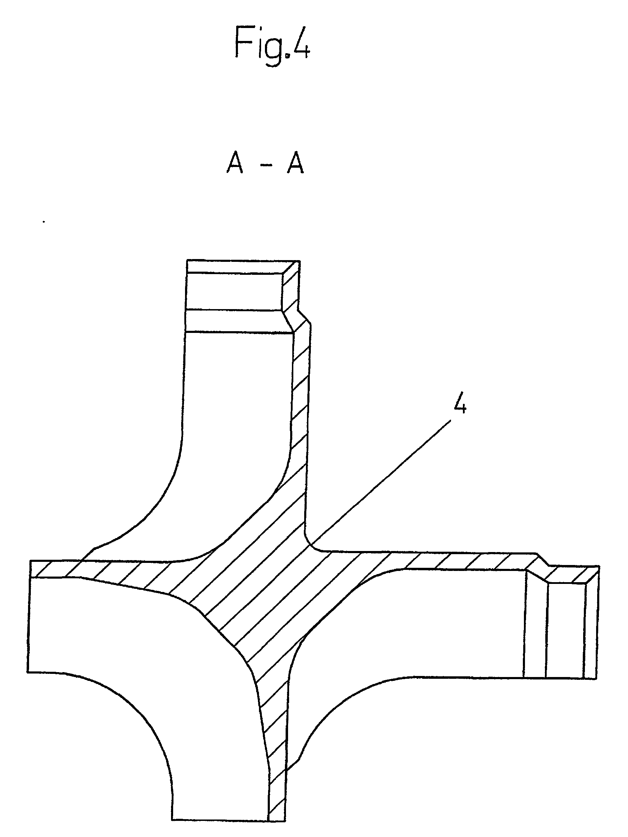

Fig. 1 zeigt die grundsätzliche Anordnung der Guß-Formstücke 5 in den Ecken zweier benachbarter Fensterausschnitte. Mit den die Fensterausschnitte begrenzenden horizontalen Versteifungsprofilen 1 der Brüstung, den vertikalen Versteifungsprofilen 2 der Fenstersäule und den horizontalen Versteifungsprofilen 3 der Voute bilden sie den Rahmenverband des Fensterausschnittes mit den Ausschnittsecken 4. Die Ausbildung der Guß-Formstücke 5 im Detail zeigen Fig. 2 bis 4. Die kreuzförmige Gestaltung gewährleistet die Anordnung der Anbindungen 5a - 5d an die vertikalen und horizontalen Versteifungsprofile. Breite und Struktur der Anbindungen entsprechen denen der Versteifungsprofile. Die Seitenflächen 6 des Guß-Formstückes 5 werden vor allem von den Schenkeln der Anbindungen 5a - 5d gebildet. Die die Ausschnitte begrenzenden Anbindungen 5a und 5b sind gegenüber den Anbindungen 5c und 5d länger und in den verlängerten Endteilen 7 eingezogen ausgeführt. Auf der zum Außenblech gerichteten Seite besitzt das Guß-Formstück 5 einen tropfenförmigen, erhabenen, flächigen Teil 8, der wie auch die weichen Übergänge zum Gerippe der Vermeidung von Steifigkeitssprüngen dienen.

### Bezugszeichenliste

- 1: horizontales Versteifungsprofil (Brüstung)
- 2: vertikales Versteifungsprofil (Fenster)
- 3: horizontales Versteifungsprofil (Voute)
- 4: Ausschnittsecke
- 5: Guss-Formstück
- 5a: Anbindung (an 1, 2 oder 3)
- 5b: Anbindung (an 2, 3 oder 1)
- 5c: Anbindung an horizontales oder vertikales Versteifungsprofil
- 5d: Anbindung an vertikales oder horizontales Versteifungsprofil
- 6: Seitenfläche des Guss-Formstückes 5
- 7: verlängertes Endteil der Anbindungen 5a und 5b
- 8: erhabener, flächiger Teil

## Patentansprüche

1. Einrichtung zur Verstärkung der Ecken in Ausschnitten von orthogonal versteiften Wand-/Deckenbereichen von Fahrzeugen, mit einem in den Ecken der Ausschnitte anbringbaren Formstück mit den erforderlichen Anbindungen zum Verschweißen mit horizontalen und vertikalen Versteifungsprofilen, wobei das Formstück in der Ebene der Wand/Decke eine kreuzförmige Ausbildung besitzt und die Anbindungen in der Breite etwa der Breite der Versteifungsprofile entsprechen, **dadurch gekennzeichnet, dass** das Formstück ein Guss-Formstück (5) ist, das parallel zur Ebene der Wand/Decke Seitenflächen (6) aufweist, die vor allem von den Schenkeln der Anbindungen (5a, 5b, 5b, 5d) gebildet werden oder mit diesen in Verbindung stehen und
dass die die Ausschnittsecke (4) begrenzenden Anbindungen (5a, 5b) des Guss-Formstückes (5) länger als die beiden anderen Anbindungen (5c, 5d) ausgeführt sind.

2. Einrichtung nach Anspruch 1, **dadurch gekennzeichnet, dass** die die Ausschnittsecke (4) begrenzenden Anbindungen (5a, 5b) des Guss-Formstückes (5) in den verlängerten Endteilen (7) eingezogen ausgeführt sind.

3. Einrichtung nach einem der Ansprüche 1 oder 2, **dadurch gekennzeichnet, dass** das Guss-Formstück (5) auf der zum Außenblech gerichteten Seite einen erhabenen, flächigen Teil (8) aufweist, der sich in einem geeigneten Abstand von der Kante der Ausschnittsecke (4) zu den anderen Kanten der Seitenfläche (6) hin erstreckt.

4. Einrichtung nach Anspruch 3, **dadurch gekennzeichnet, dass** der erhabene, flächige Teil (8) eine Tropfenform aufweist.

## Claims

1. Device for stiffening the corners in openings in orthogonally stiffened wall/ceiling areas of vehicles, with a shaped part which can be attached in the corners of the openings and has the required attachment elements for welding to horizontal and vertical stiffening profiles, wherein the shaped part is cross-shaped in the plane of the wall/ceiling and the breadth of the attachment elements roughly matches the breadth of the stiffening profiles, **characterised in that** the shaped part is a cast shaped part (5) which parallel to the plane of the wall/ceiling exhibits side surfaces (6) which are formed above all by the limbs of the attachment elements (5a, 5b, 5c, 5d) or are connected to these, and **in that** the attachment elements (5a, 5b) of the cast shaped part (5) bounding the corner (4) of the opening are made longer than the other two attachment elements (5c, 5d).

2. Device according to claim 1, **characterised in that** the attachment elements (5a, 5b) of the cast shaped part (5) bounding the corner (4) of the opening are recessed in the elongated end parts (7).

3. Device according to one of claims 1 or 2, **characterised in that** on the side facing the skin panel the cast shaped part (5) exhibits a raised flat part (8) which extends a suitable distance from the edge of the corner (4) of the opening to the other edges of the side surface (6).

4. Device according to claim 3, **characterised in that** the raised flat part (8) exhibits a drop shape.

## Revendications

1. Dispositif pour consolider les coins dans des ouvertures de zones de paroi/toit à renforcements orthogonaux de véhicules, comprenant une pièce profilée qui est apte à être montée dans les coins des ouvertures et qui comporte les liaisons nécessaires en vue d'être soudée à des profilés de renforcement horizontaux et verticaux, ladite pièce profilée ayant dans le plan de la paroi/du toit la forme d'une croix, et la largeur des liaisons correspondant à peu près à la largeur des profilés de renforcement, **caractérisé en ce que** la pièce profilée est une pièce coulée (5) présentant, parallèlement au plan de la paroi/du toit, des parois latérales (6) qui sont définies avant tout par les branches des liaisons (5a, 5b, 5c, 5d) ou sont reliées à celles-ci, et **en ce que** les liaisons (5a, 5b) de la pièce coulée (5) qui délimitent le coin (4) de l'ouverture sont plus longues que les deux autres liaisons (5c, 5d).

2. Dispositif selon la revendication 1, **caractérisé en ce que** les liaisons (Sa, 5b) de la pièce coulée (5) qui délimitent le coin (4) de l'ouverture sont en retrait, dans les parties d'extrémité prolongées (7).

3. Dispositif selon la revendication 1 ou 2, **caractérisé en ce que** la pièce coulée (5) présente, sur le côté dirigé vers la tôle extérieure, une partie plane en relief (8) qui s'étend, à une distance appropriée du bord du coin (4) de l'ouverture, vers les autres bords de la surface latérale (6).

4. Dispositif selon la revendication 3, **caractérisé en ce que** la partie plane en relief (8) a la forme d'une goutte.
